# EUROPEAN PATENT APPLICATION

(11) **EP 4 637 167 A1**
(43) Date of publication of application: **22.10.2025**
(21) Application number: 24315190.9
(22) Date of filing: 18.04.2024
(51) Int. Cl.: H04N 21/845, H04N 21/854, H04N 21/44, H04N 21/4728

(54) **ANNOTATED MEDIA IN 3D SCENE DESCRIPTION FILE**

(71) Applicant: InterDigital CE Patent Holdings, SAS, 75017 Paris (FR)
(72) Inventor: Chupeau, Bertrand, 35700 RENNES (FR); Lelievre, Sylvain, 35760 MONTGERMONT (FR); Hirtzlin, Patrice, 35830 BETTON (FR); Faivre D'Arcier, Etienne, 35750 SAINT GONLAY (FR); Jouet, Pierrick, 35000 RENNES (FR); Fontaine, Loic, 35530 NOYAL SUR VILAINE (FR); Krivokuca, Maja, 35000 RENNES (FR)
(74) Representative: Vossius & Partner Patentanwälte Rechtsanwälte mbB

(57) **Abstract**

Systems and methods for scene description file encoding and decoding that support partial decoding of media content. In an example scene decoding method, a scene description file is obtained, such as a glTF file. The scene description file includes first information (e.g. a URI) that identifies at least a first media stream and second information (e.g. an identifier, a label, or coordinates) that identifies at least one parameter for the decoding of the first media stream. Annotation information associated with the first media stream is also obtained, e.g. from an SEI message. The annotation information associates the parameter with at least one independently decodable portion of the first media stream. The independently decodable portion of the first media stream is decoded for presentation to a user, e.g. in an extended reality scene.

## Description

### BACKGROUND

In extended Reality (XR) applications, an XR device receives the virtual content in a scene description file, anchors some of the virtual elements in the real world and makes real and virtual elements interact. The real-world representation may be referenced in a scene description file as a media source containing a 2D video content or an immersive 3D content. These contents may represent synthetic content or a live or a pre-recorded capture of a real environment. Thay are generally encoded with well-known standard codecs (AVC, HEVC, WC for 2D content and V3C for immersive content).

The content may be accompanied by a set of annotation messages or metadata that give semantics and spatial information on the content: labelling of portions or objects in the 2D video or the immersive content along with the corresponding bounding area/box, description of pre-defined regions in the content. The labelling may correspond to the type of objects that are represented in the content (e.g. "chair", "table", "person", "tree", and the like).

Those messages or metadata may also contain mapping information between a labeled element or pre-defined regions of the content and parts of the encoded content that can be decoded independently from the other parts.

### SUMMARY

A scene decoding method according to some embodiments comprises: obtaining a scene description file, the scene description file including first information identifying a first media stream and second information identifying at least one parameter for decoding of the first media stream; obtaining annotation information associated with the first media stream, wherein the annotation information associates the parameter with at least one independently decodable portion of the first media stream; and decoding the independently decodable portion of the first media stream.

A scene decoding apparatus according to some embodiments comprises one or more processors configured to perform at least: obtaining a scene description file, the scene description file including first information identifying a first media stream and second information identifying at least one parameter for decoding of the first media stream; obtaining annotation information associated with the first media stream, wherein the annotation information associates the parameter with at least one independently decodable portion of the first media stream; and decoding the independently decodable portion of the first media stream.

A scene encoding method according to some embodiments comprises: encoding a scene description file, the scene description file including first information identifying a first media stream and second information identifying at least one parameter for decoding of the first media stream; wherein the first media stream includes annotation information, the annotation information associating the parameter with at least one independently decodable portion of the first media stream.

A scene encoding apparatus according to some embodiments comprises one or more processors configured to perform at least: encoding a scene description file, the scene description file including first information identifying a first media stream and second information identifying at least one parameter for decoding of the first media stream; wherein the first media stream includes annotation information, the annotation information associating the parameter with at least one independently decodable portion of the first media stream.

In some embodiments, the first information includes a uniform resource identifier, URI, of the first media stream.

In some embodiments, the annotation information is provided in a supplemental enhancement information, SEI, message, inserted in the media bitstream.

In some embodiments, the annotation information is provided in a container file.

In some embodiments, the second information includes an identifier or label of the section of the first media stream, and wherein the annotation information associates the identifier or label with the independently decodable portion of the first media stream.

In some embodiments, the second information includes coordinates.

In some embodiments, the annotation information includes coordinates of at least one of the annotated sections of the first media stream.

In some embodiments, the independently decodable portion of the first media stream is a submesh, a tile, or a subpicture. The way a 2D or 3D content is subdivided into independently decodable portions is codec specific and is part of the encoded data of the content.

In some embodiments, the second information includes first coordinates defining a region in the first media stream, the annotation information includes second coordinates of annotated regions that are associated with respective independently decodable portions of the first media stream, and the independently decodable portion of the first media stream is decoded in response to a determination that the independently decodable portion is associated with annotated regions corresponding to the coordinates in the second information.

In some embodiments, the second information identifies a viewport-based region, and the annotation information includes coordinates of the independently decodable portion of the first media stream, and the method further comprises: determining a current user viewport; wherein the independently decodable portion of the first media stream is decoded in response to a determination that the independently decodable portion is associated with annotated regions corresponding to the coordinates of the current user viewport.

Some embodiments further comprise initializing a media access function, MAF, wherein initializing the MAF comprises providing the second information using an application programming interface, API, of the MAF.

A computer-readable medium according to some embodiments stores instructions for performing any of the methods described herein. In some embodiments, the computer-readable medium is a non-transitory medium.

### BRIEF DESCRIPTION OF THE DRAWINGS

FIG. 1 is a schematic illustration of the MPEG-SD reference architecture.
FIG. 2 is a schematic illustration of the structure of a scene description file.
FIG. 3 is a flow diagram illustrating an example processing model of a User Equipment (UE), loading a MPEG-SD gITF file that references annotated content and configuring the decoder pipelines.
FIG. 4 is a flow diagram of a scene decoding method according to some embodiments.
FIG. 5 is a functional block diagram of a system on which example encoding and decoding methods can be performed in some embodiments.

### DETAILED DESCRIPTION

### Overview of semantics description in 2D video content.

2D codecs, such as HEVC and WC, specify optional supplementary enhancement information (SEI) messages that can be inserted into the content bitstream. SEI messages carry additional technical information related to the encoded bitstream but also specific application information. The ISO/IEC 23002-7 standard ("Versatile SEI messages for coded video bitstream") specifies a set of SEI messages for different 2D codecs like VVC or HEVC, inserted in the bitstream. The annotated regions SEI message carries information that identifies annotated (labelled) regions using bounding boxes representing the size and location of identified objects. With HEVC and WC, each subpicture of a 2D content may be subdivided into independently decodable regions (motion-constrained tile set in HEVC or subpictures in WC), that a decoder can partially decode. Depending on the way the subdivision is performed, only the parts of a content that match with one or more annotated regions can be extracted. The payload of such an SEI message is as follows. A dagger (†) identifies examples of elements of the SEI message that may be used in some embodiments for identifying an independently-decodable portion of the associated media stream.

| | |
|---|---|
| annotated_regions( payloadSize ) { | **Descriptor** |
| **ar_cancel_flag** | u(1) |
| **ar_not_optimized_for_viewing_flag** | u(1) |
| **ar_true_motion_flag** | u(1) |
| **ar_occluded_object_flag** | u(1) |
| **ar_partial_object_flag_present_flag** | u(1) |
| **ar_object_label_present_flag** | u(1) |
| **ar_object_confidence_present_flag** | u(1) |
| if( ar_object_confidence_present_flag ) | |
| **ar_object_confidence_length_minus1** | u(4) |
| if( ar_object_label_present_flag ) { | |
| **ar_object_label_language_present_flag** | u(1) |
| if( ar_object_label_language_present_flag ) { | |
| while( !byte_aligned( ) ) | |
| **ar_bit_equal_to_zero** /* equal to 0 */ | f(1) |
| **ar_object_label_language** | st(v) |
| } | |
| **ar_num_cancelled_labels** | ue(v) |
| for( i = 0; i < ar_num_cancelled_labels; i++ ) | |
| **ar_cancelled_label_idx[ i ]** | ue(v) |
| **ar_num_new_labels** | ue(v) |
| for( i = 0; i < ar_num_new_labels; i++ ) | |
| **ar_label_idx[** i ] | ue(v) |
| while( !byte_aligned( ) ) | |
| **ar_bit_equal_to_zero** /* equal to 0 */ | f(1) |
| **ar_label**[ ar_label_idx[ i ] ] † | st(v) |
| } | |
| } | |
| **ar_num_cancelled_objects** | ue(v) |
| for( i = 0; i < ar_num_cancelled_objects; i++ ) | |
| **ar_cancelled_object_idx**[ i ] | ue(v) |
| **ar_num_objects_minus1** | ue(v) |
| for( i = 0; i <= ar_num_objects_minus1 ;i++ ) { | |
| **ar_object_idx[** i ] | ue(v) |
| **ar_new_object_flag[** ar_object_idx[ i ] ] | u(1) |
| if( !ar_new_object_flag[ ar_object_idx[ i ] ] ) | |
| **ar_bounding_box_update_flag[** ar_object_idx[ i ] ] | u(1) |
| if( ar_new_object_flag[ ar_object_idx[ i ] && ar_object_label_present_flag ) | |
| **ar_object_label_idc[** ar_object_idx[ i ] ] † | ue(v) |
| if( ar_partial_object_flag_present_flag ) | |
| **ar_partial_object_flag[** ar_object_idx[ i ] ] | u(1) |
| if( ar_object_bounding_box_update_flag[ ar_object_idx[ i ] ] \| \| ar_new_object_flag[ ar_object_idx[ i ] ]) { | |
| **ar_object_top[** ar_object_idx[ i ] ] † | u(16) |
| **ar_object_left[** ar_object_idx[ i ] ] † | u(16) |
| **ar_object_width[** ar_object_idx[ i ] ] † | u(16) |
| **ar_object_height[** ar_object_idx[ i ] ] † | u(16) |
| if( ar_object_confidence_present_flag ) | |
| **ar_object_confidence**[ ar_object_idx[ i ] ] | u(v) |
| } | |
| } | |
| } | |

### Overview of volumetric annotation in immersive content.

Volumetric media content may be coded using the visual volumetric video-based coding standard 23090-5 ("Visual Volumetric Video-based Coding (V3C) and Video-Based Point Cloud Compression (V-PCC)"). V3C is generic mechanism for volumetric video coding, and it can be used by applications targeting volumetric content, such as point clouds, immersive video with depth, mesh representations of visual volumetric frames, etc. Examples of coding standards which are extensions of V3C for such applications are Video-based Point Cloud Compression (V-PCC), MPEG Immersive Video (MIV) and Video-based Dynamic Mesh Coding (V-DMC).

V3C encoding of a volumetric frame is achieved through a conversion of a volumetric frame from its 3D representation to multiple 2D representations (representing different elements like geometry, texture or occupancy) and a generation of associated data. V3C supports the concept of tiling where the volumetric frame is encoded as a number of tiles (independently-decodable portion of the content) to enable parallel encoding/decoding and for easy access to one or more regions of V3C content, especially in streaming scenarios.

### Overview of volumetric annotation SEI messages.

The ISO/IEC 23090-5 specification also defines a set of Volumetric Annotation SEI messages providing information on different objects within the V3C content and the spatial regions or V3C atlas tiles associated with those objects. Here is an example of SEI message format describing objects properties such as labels, priority, hidden flag, dependencies, bounding box, direction, collision shape, and the like. A dagger (f) identifies examples of elements of the SEI message that may be used in some embodiments for identifying an independently-decodable portion of the associated media stream.

| | |
|---|---|
| scene_object_information( payloadSize ) { | |
| **soi_persistence_flag** | u(1) |
| **soi_reset_flag** | u(1) |
| **soi_num_object_updates** | ue(v) |
| if( soi_num_object_updates > 0 ) { | |
| **soi_simple_objects_flag** | u(1) |
| if( soi_simple_objects_flag == 0) { | |
| **soi_object_label_present flag** | u(1) |
| **soi_priority_present_flag** | u(1) |
| **soi_object_hidden_present_flag** | u(1) |
| **soi object dependency_present flag** | u(1) |
| **soi visibility_cones_present flag** | u(1) |
| **soi 3d_bounding box_present flag** | u(1) |
| **soi_collision_shape_present_flag** | u(1) |
| **soi_point_style_present_flag** | u(1) |
| **soi_material_id_present_flag** | u(1) |
| **soi extension_present flag** | u(1) |
| } | |
| ... | |
| for( i = 0; i < soi_num_object_updates; i++ ) { | |
| **soi_object_idx**[ i ] | u(v) |
| k = soi_object_idx[ i ] † | |
| **soi_object_cancel_flag**[ k ] | u(1) |
| ObjectTracked[ k ] = !soi_object_cancel_flag[ k ] | |
| if( !soi_object_cancel_flag[ k ] ) { | |
| if( soi_object_label_present_flag ) { | |
| **soi_object_label_update_flag[** k ] | u(1) |
| if( soi_object_label_update_flag[ k ] ) | |
| **soi_object_label_idx**[ k ] † | ue(v) |
| } | |
| if( soi_priority_present_flag ) { | |
| **soi_priority_update_flag**[ k ] | u(1) |
| if( soi_priority_update_flag[ k] ) | |
| **soi_priority_value**[ k ] † | u(4) |
| } | |
| if( soi_object_hidden_present_flag ) | |
| **soi_object_hidden_flag**[ k ] † | u(1) |
| if( soi_object_dependency_present_flag ) { | |
| **soi_object_dependency_update_flag**[ k ] | u(1) |
| if( soi_object_dependency_update_flag[ k ] ) { | |
| **soi_object_num_dependencies**[ k] † | u(4) |
| for( j = 0; j < soi_object_num_dependencies[ k ]; j++ ) | |
| **soi_object_dependency_idx[** k ][ j ] | u(v) |
| } | |
| } | |
| if( soi_visibility_cones_present_flag ) { | |
| **soi_visibility_cones_update_flag**[ k ] | u(1) |
| if( soi_visibility_cones_update_flag[ k)) { | |
| **soi_direction_x**[ k ] † | i(16) |
| **soi_direction_y**[ k ] † | i(16) |
| **soi_direction_z[** k] † | i(16) |
| **soi_angle**[ k ] † | u(16) |
| } | |
| } | |
| if( soi_3d_bounding_box_present_flag ) { | |
| **soi_3d_bounding_box_update_flag**[ k ] | u(1) |
| if( soi_3d_bounding_box_update_flag[ k ]) { | |
| **soi_3d_bounding_box_x[** k ] † | ue(v) |
| **soi_3d_bounding_box_y**[ k ] † | ue(v) |
| **soi_3d_bounding_box_z**[ k ] † | ue(v) |
| **soi_3d_bounding_box_size_x**[ k ] † | ue(v) |
| **soi_3d_bounding_box_size_y**[ k] † | ue(v) |
| **soi_3d_bounding_box_size_z**[ k] † | ue(v) |
| } | |
| } | |
| if( soi_collision_shape_present_flag ) { | |
| **soi_collision_shape_update_flag**[ k ] | u(1) |
| if(soi_collision_shape_update_flag[ k ]) | |
| **soi_collision_shape_id[** k ] † | u(16) |
| } | |
| if( soi_point_style_present_flag ) { | |
| **soi_point_style_update_flag**[ k ] | u(1) |
| if( soi_point_style_update_flag[ k ] ) { | |
| **soi_point_shape_id[** k] † | u(8) |
| **soi_point_size**[ k ] † | u(16) |
| } | |
| } | |
| soi_material_id_present_flag ) { | |
| **_material_id_update_flag**[ k ]u | ) |
| oi_material_id_update_flag[ k] ) | |
| **aterial_id**[ k ] †u1 | |
| | |
| | |
| | |
| | |
| | |

Other SEI messages (patch information and atlas object association SEI messages) associate objects with V3C patches and atlases of the encoded content, as follows.

| | |
|---|---|
| patch_information( payloadSize ) { | **Descriptor** |
| **pi_persistence_flag** | u(1) |
| **pi_reset_flag** | u(1) |
| **pi_num_tile_updates** | ue(v) |
| if( pi_num_tile_updates > 0 ) { | |
| **pi_log2_max_object_idx_tracked_minus1** | u(5) |
| **pi_log2_max_patch_idx_updated_minus1** | u(4) |
| } | |
| for( i = 0; i < pi_num_tile_updates; i++ ) { | |
| **pi_tile_id**[ i ] | ue(v) |
| j = pi_tile_id[ i ] | |
| **pi_tile_cancel_flag[** j ] | u(1) |
| **pi**_**num_patch**_**updates[** j ] | ue(v) |
| for( k = 0; k < pi_num_patch_updates[ j ]; k++ ) { | |
| **pi_patch_idx[** j ][ k ] | u(v) |
| p **=** pi_patch idx[ j ][ k ] | |
| **pi_patch_cancel_flag[** j ][ p ] | u(1) |
| if( !pi_patch_cancel_flag[ j ][ p ] ) { | |
| **pi_patch**_**number**_**of_objects_minus1**[ j ][ p ] | ue(v) |
| m = pi_patch_number_of_objects_minus1[ j ][ p ] + 1 | |
| for( n = 0; n < m; n++ ) | |
| **pi_patch_object_idx**[ j ][ p ][ n ] | u(v) |
| } | |
| } | |
| } | |
| } | |

| | |
|---|---|
| atlas_object_association( payloadSize ) { | **Descriptor** |
| **aoa_persistence_flag** | u(1) |
| **aoa_reset_flag** | u(1) |
| **aoa_num_atlases_minus1** | u(6) |
| **aoa_num_updates** | ue(v) |
| if( aoa_num_updates > 0 ) { | |
| **aoa_log2_max_object_idx_tracked_minus1** | u(5) |
| for( j = 0; j < aoa_num_atlases_minus1 + 1; j++ ) | |
| **aoa_atlas_id**[ j ] | u(6) |
| for( i = 0; i < aoa_num_updates; i++ ) { | |
| **aoa_object_idx[** i ] | u(v) |
| k = aoa_object_idx[ i ] | |
| for( j = 0; j < aoa_num_atlases_minus1 + 1; j++) | |
| **aoa_object_in_atlas**[ k ][ aoa_atlas_id[ j ] ] | u(1) |
| } | |
| } | |
| } | |

### Overview of spatial regions information.

The ISO/IEC 23090-10 specification ("Carriage of V3C data"), associated with the V3C specification, defines information on the different spatial regions defined for the V3C content, including the bounding box for the spatial region and its association with one or more V3C atlas tiles. Such information may be included in a container file. The syntaxes of spatial regions are as follows. A dagger (f) identifies examples of elements that may be used in some embodiments for identifying an independently-decodable portion of the associated media stream.

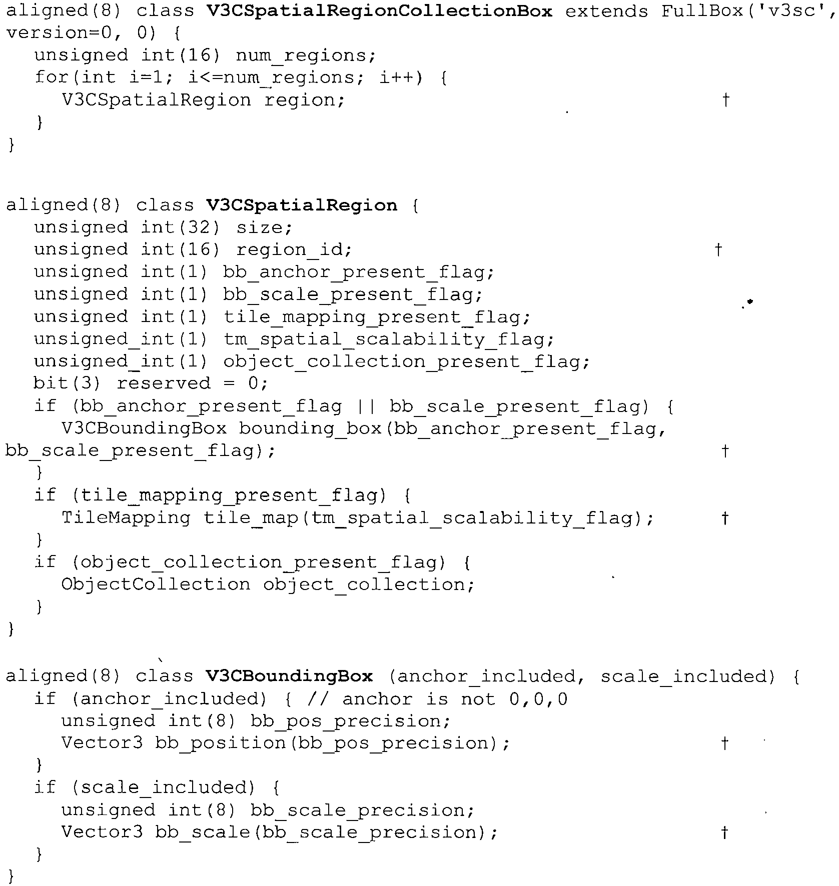

A mapping may be provided between a spatial region and the set of atlas tiles that contain patches associated with that spatial region as follows.

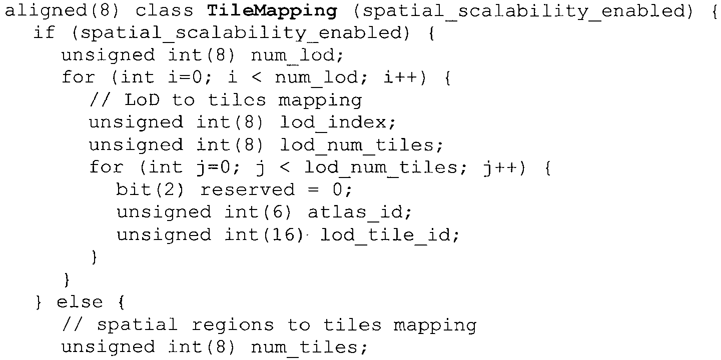

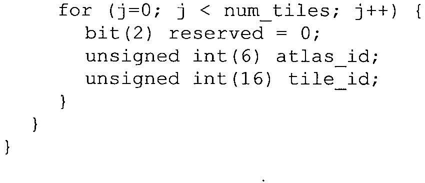

### Overview of annotations for submeshes.

Compression of mesh representations is currently ongoing in MPEG under Video-based Dynamic Mesh Compression (ISO/IEC 23090-29 on Video-based Dynamic Mesh Coding (V-DMC)). In V-DMC, submeshes have been introduced, allowing parts of the model to be decoded independently.

With the use of submeshes, a base mesh may be divided into multiple independently decodable submeshes. The submeshes can be encoded and decoded independently without using any information from other submeshes. This allows partial access of the mesh by identifying, delivering, decoding and reconstructing only some of the submeshes present in a V-DMC bitstream.

In a recent MPEG contribution (m65290, "SEI message for indirect definition of bounding boxes in 3D coordinate space for submeshes," Oct. 2023), a new SEI message (submesh SOI relationship indication SEI message) has been proposed to identify submeshes and associate them with an object of the encoded scene or part of a model. The soi_object_idx is from the SOI SEI message mentioned above. A dagger (†) identifies examples of elements of the SEI message that may be used in some embodiments for identifying an independently-decodable portion (submesh) of the associated media stream.

| | |
|---|---|
| submesh_soi_relationship_indication ( payloadSize ) { | |
| **persistence_association_flag** | u(1) |
| **number_of_active_scene_objects** | ue(v) |
| **submesh_id_length_minus1** | ue(v) |
| for(i=0 ; i<number_of_active_scene_object ; i++) { | |
| **soi_object_idx** † | u(v) |
| **number_of_submesh_included** | ue(v) |
| for(( j=0 ; j<number_of_submesh_included ; j++) { | |
| **submesh_id** | u(v) |
| **completely_included** | u(1) |
| } | |
| | |
| } | |

### Overview of 2D or Immersive content in scene description file.

In the MPEG-I scene description specifications, ISO/IEC DIS 23090-14:2023, the glTF (Graphics Library Transmission Format) MPEG_media extension provides an array of MPEG media items referenced by other extensions in the glTF document. In the amendment 1 of the MPEG-SD specifications (ISO/IEC DIS 23090-14:2023/Amd1 :2023), a dedicated extension for primitive specifies extra parameters to handle V3C immersive media. This extension is expressed at the mesh-level so that a node, in a glTF scene graph, referencing a mesh with this extension, will position the objects contained in the media in the scene.

The position may be relative to a position in the real word if the node is associated with an anchor described in the scene graph (e.g. using the MPEG_anchor extension specified in the amendment 2 of the MPEG-SD specification, ISO/IEC DIS 23090-14:2023/DAmd2 :2023).

An MPEG media item contains several parameters related to the control of the media (startTime, startTimeOffset, endTimeOffset, autoplay, loop, controls, etc.). Some of the contents of an MPEG media item are as follows:

| **Name** | **Type** | **Default** | **Usage** | **Description** |
|---|---|---|---|---|
| name | string | N/A | O | User-defined name of the media. |
| startTime | number | 0 | O | The startTime gives the time at which the rendering of the timed media will be in seconds. |
| startTimeOffset | number | 0 | O | The startTimeOffset indicates the time offset into the source, starting from which the timed media is generated. |
| endTimeOffset | number | N/A | O | The endTimeOffset indicates the time offset into the source, up to which the timed media is generated. |
| ... | | | | |
| alternatives | array | N/A | M | An array of alternatives of the same media (e.g. different codecs used) |
| extensions | object | N/A | O | JSON object with extension-specific objects. |
| extras | any | N/A | O | Application-specific data. |

As seen above, the MPEG media item includes an array of alternatives of the same media (different uri/url, video codecs, etc.). The semantics of an alternative item is given in the following table:

| **Name** | **Type** | **Default** | **Usage** | **Description** |
|---|---|---|---|---|
| mimeType | string | N/A | M | The media's MIME type. |
| | | | | The profiles parameter, as defined in IETF RFC6381, may be included as a part of the mimeType to specify the profile of the media container. (e.g. the profiles parameter indicates the DASH profile when the uri specifies a DASH manifest) |
| uri | string | N/A | M | The uri of the media. Relative paths are relative to the .gltf file. If the reference media is a real-time media stream, then the uri may follow the referencing scheme defined in Annex C. If the tracks element is present, the last part of the URI (i.e. the stream identifier such as the mid) is provided by the tracks information. |
| tracks | array | N/A | O | An array of items that lists the components of the referenced media source that are to be used. These can e.g. be a track number of an ISOBMFF, a DASH/CMAF SwitchingSet identifier, or a media id of an RTP stream. |
| extraParams | object | N/A | O | An object that may contain any additional media-specific parameters. |

The MPEG-SD standard also specifies a Media Access Function module and an API. The presentation engine, which handles the scene description file, uses this API to initialize the MAF for the processing of media sources: one decoding pipeline is created for each media sources.

Here is the signature of an MAF initialize() method use to initialize a pipeline:

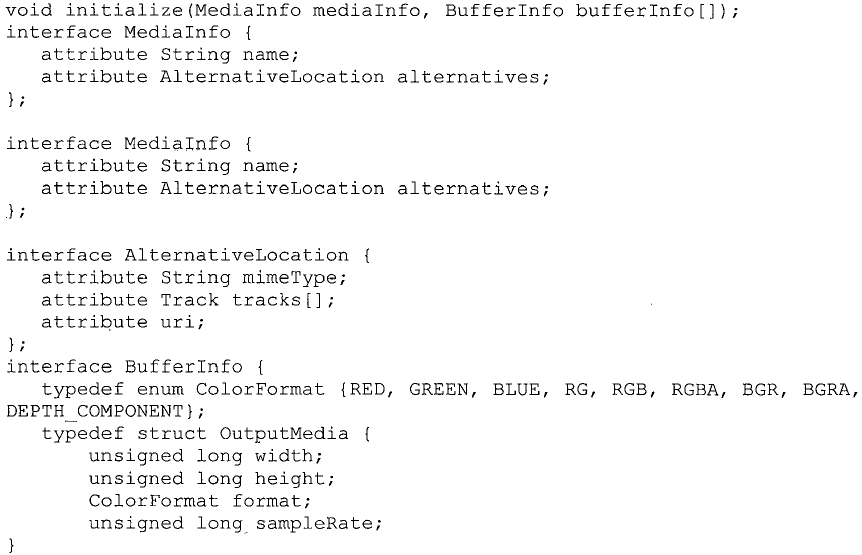

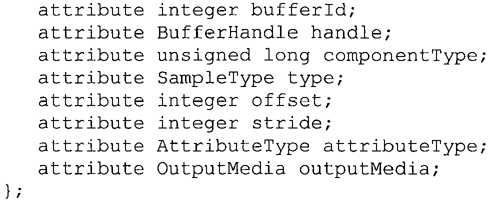

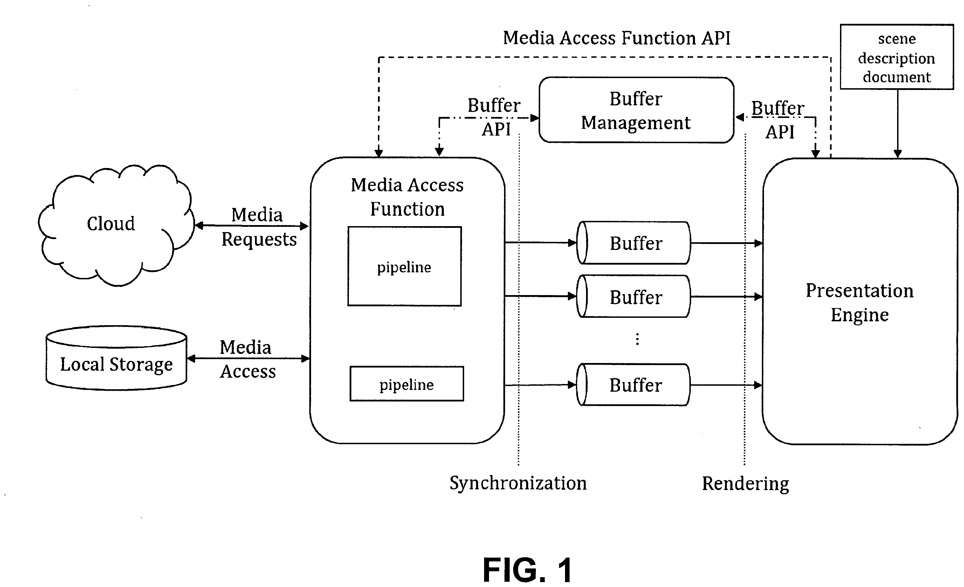

FIG. 1 is a schematic illustration of the MPEG-SD reference architecture. In the architecture, a presentation engine is used to render the content, which may include, for example, audio, visual, and/or haptic content. A media access function (MAF) component handles the accessing and processing of the media. The presentation engine uses an API to request the media from the MAF. The MAF constructs one or more media pipelines that convert the media from its original delivery format into formats that can be used by the presentation engine. The MAF performs decoding and post processing of the media, and it provides the processed media to the presentation engine for rendering through one or more buffers.

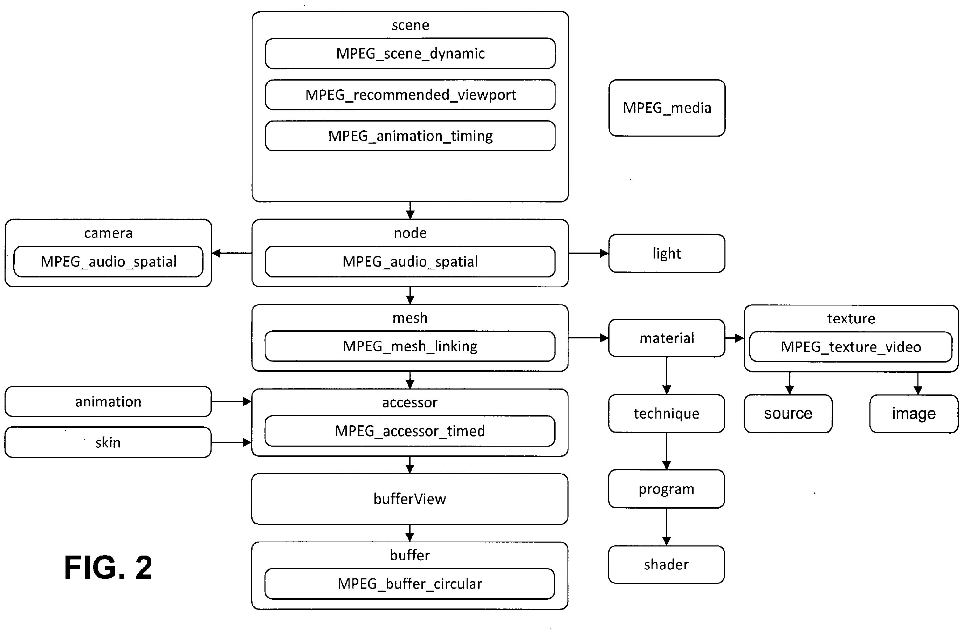

FIG. 2 is a schematic illustration of the structure of a scene description file.

A 2D or an immersive encoded content may be referenced in a 3D scene description file. This content may represent individual objects or an entire scene with many elements. In the latter case, the creator of a 3D scene may want to reference only some parts of the content, such as a surface of a volume, a specific type of object, or other part of the content. If an encoding content contains annotation metadata (e.g. SEI message) as described above, parameters are missing in the current scene description formats (e.g. MPEG-SD) to take into account these messages and specify a partial access to a content.

The following description is provided with reference to the MPEG-SD standard, but it may be adapted to any scene description languages where 2D or immersive content can be referenced. Some embodiments make use of a new semantics for an MPEG-SD file, to allow a 3D scene creator to specify the elements of a content to be accessed. Some embodiments include new parameters for the MAF API. Some embodiments include a processing model to configure the partial decoding.

### Example semantics for an MPEG-I Scene Description file.

In an alternatives object of an MPEG_media items, the extraParams object (or another new parameter) may be used to specify decoding options related to partial decoding. These options may be used in relation with the annotation messages contained in the encoded content, to determine the independently decodable regions (tiles, subpictures, submeshes, and the like) of the content that match the decoding options.

Example embodiments make use of one or more of the parameters in the following table, which may be used to configure the decoding of an immersive or 2D content. The positions specified for some of the parameters are expressed in the reference space of the content.

| **Name** | **Type** | **Default** | **Usage** | **Description** | |
|---|---|---|---|---|---|
| *regionIds* | array | N/A | O | An array of ids (e.g. 16bit integers) that uniquely identify pre-defined 3D regions in the encoded content. The ids may refer for example to the region_id parameter of the V3CSpatialRegion data structure described above. In an example embodiment, decoding is performed only of the parts of the content contained in the corresponding regions, e.g. by using annotation messages to determine the independently-decodable regions of the content (tiles or submeshes) associated with each "region_id". | |
| *labels* | array | N/A | O | An array of semantics information (e.g. a string value) among pre-defined labels in the encoded content. Each label may refer for example to a soi_object_label_idx[k] syntax element in a scene_object_information SEI message as described above. In the case of 2D content, a label may refer for example to an ar_object_label_idc syntax element in an annotated_regions SEI message as described above. In an example embodiment, decoding is performed only of the parts of the content contained in the corresponding regions, e.g. by using annotation messages to determine the independently-decodable regions of the content (tiles or submeshes) associated with each label. | |
| *3Dregions* | array | N/A | O | Array of arbitrary spatial 3D regions of interest. In an example embodiment, decoding is performed only of the parts of the 3D content (pre-defined regions and/or objects) that are entirely or partially contained in these regions, e.g. by using annotation messages to determine the annotated regions that fit into these 3D regions and the independently-decodable regions of the content (tiles or submeshes) associated with these annotated regions. | |
| | | | | Each items may be specified with pose and size information in the 3 axis (x,y,z): | |
| | | | | | • A 4×4 matrix representing the center position and orientation of the region. |
| | | | | | • A vector giving the edge-to-edge length of the region along each axis. |
| *2DRegions* | array | N/A | O | Array of arbitrary spatial 2D regions of interest. In an example embodiment, decoding is performed only of the parts of the 2D content (pre-defined regions and/or objects) that are entirely or partially contained in these regions, e.g. by determining the independently-decodable regions of the content (tiles or subpictures) that fit into these 2D regions. | |
| | | | | Each item may be specified with positions and size information in the 2 axis (x,y) and an orientation: | |
| | | | | | • position_x, position_y. |
| | | | | | • size_x, size_y. |
| | | | | | • rotation angle |
| *viewportOnly* | Boolean | N/A | O | If true, only the content of the encoded media that is inside the user/camera viewport is decoded. | |
| | | | | The volume of this viewport is determined and used as a *3DRegions* item. | |

Other annotation messages or data may be specified in future new standards or new versions of existing standards. Depending on how a content is annotated and the type of annotation, other parameters may be specified.

### Example parameters in the MPEG-SD Media Access Function (MAF) API.

In some embodiments, some or all of the above MPEG_media parameters may be passed as new parameters in the initialize() MAF method, to configure a decoding pipeline. As an example, the AlternativeLocation structure can be used as follows.

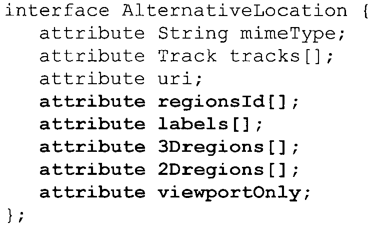

### Example processing model.

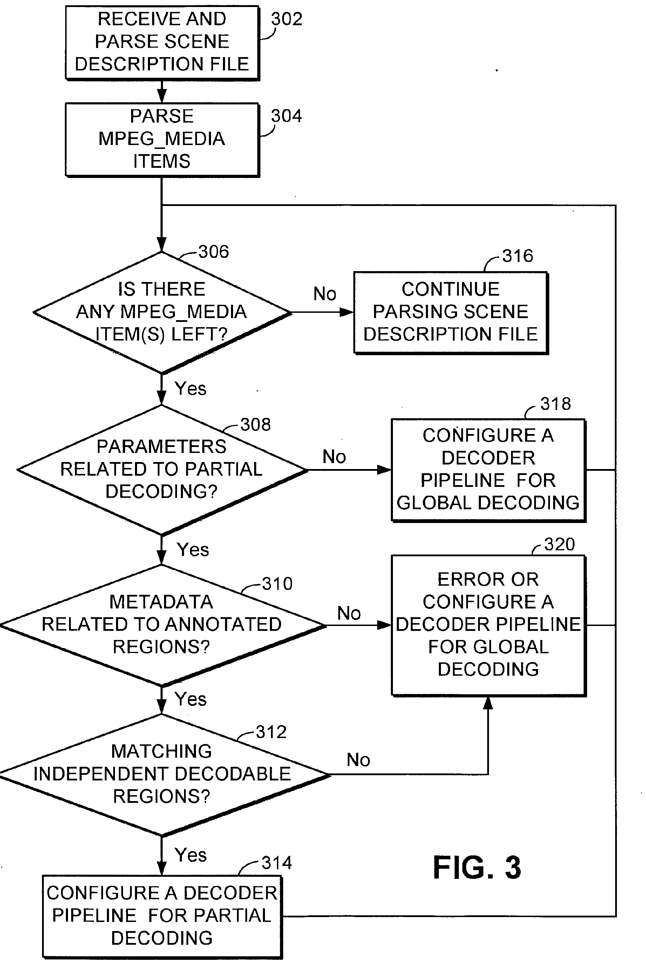

FIG. 3 is a flow diagram illustrating an example processing model of a User Equipment (UE), loading a MPEG-SD gITF file that references annotated content and configuring the decoder pipelines. The UE initializes a decoding pipeline for each content, and configures the pipelines with the parameters extracted from the media items (e.g. using the MAF API)

When receiving the scene description file, the UE begins parses the file at 302. Parsing of MPEG_media items begins at 304. If there are no additional MPEG_media items to be parsed, as determined at 306, parsing of other components of the scene description file continues at 316.

If it is determined that at 306 that the file includes media items to be parsed in an MPEG_media extension (at the root level of the gITF graph), then at 308 a determination is made of whether parameters related to partial decoding are present. If not, then at 318, a decoder pipeline is configured for global decoding.

If parameters related to a partial decoding are found (e.g. in an extraParams object from an alternatives item), the UE determines at 310 whether annotation metadata (e.g. SEI messages) related to specific regions or objects are present in the encoded content. If not, then at 320, an error may be raised, and the content will not be decoded. In another embodiment, no error is raised, and at 320 the pipeline is configured to decode the entire content. If annotation metadata related to specific regions or objects is present in the encoded content, then the MAF module determines at 312 whether independently decodable regions (e.g. tiles, subpictures, submeshes, and the like) match the annotated metadata and the decoding parameters. If not, then at 320, an error is raised, or the pipeline is configured to decode the entire content. If independently decodable regions do match the annotated metadata and the decoding parameters, then at 314 the pipeline is configured to decode only the identified regions of the content. The UE then continues the parsing of the scene description file and instantiates the other elements of the scene. (In the example of FIG. 3, the parsing of the media items and the configuration of the decoding pipelines is presented as the first part of the parsing process, but it may be performed at any stage of the parsing process.)

After this configuration phase, the device starts the decoding process for each content and the decoded data are provided by the decoding pipelines for the rendering of the scene.

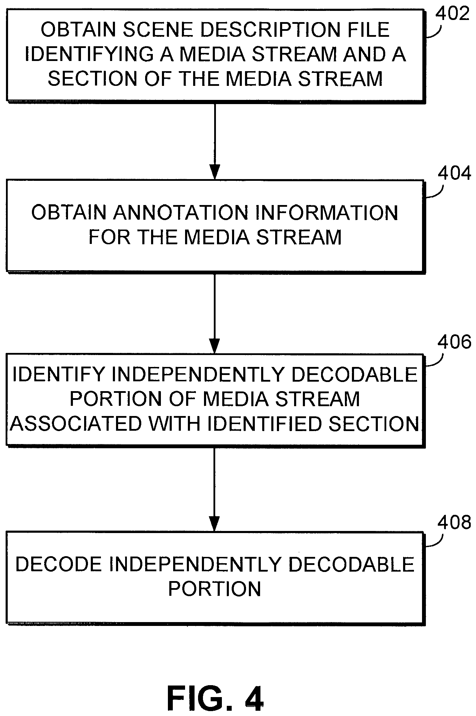

FIG. 4 illustrates an example scene decoding method. At 402, a scene description file is obtained. The scene description file may be, for example, a glTF file. The scene description file may be in a Java Script Object Notation, JSON, format. The scene description file includes first information that identifies at least a first media stream. This first information may be provided in an MPEG_media extension, among other alternatives. For example, the first information may include a URI of the first media stream in an MPEG media item, for example in an alternatives array of the media item.

The scene description file further includes second information identifying at least one section of the first media stream. The second information may be provided, for example, as an extraParams object in an alternative item of an MPEG media item, among other alternatives. In some embodiments, the second information may be an identifier (e.g. an integer identifier) or label (e.g. a string) of the section of the first media stream. In some embodiments, the second information includes coordinates defining a region in the first media stream. In some embodiments, the second information includes information indicating that the section of the first media stream is identified based on a current user or camera viewport.

At 404, annotation information is obtained for the first media stream. The annotation information identifies least one annotated section of the first media stream and associates this least one identified section with at least one independently decodable portion of the first media stream. In some embodiments, the annotation information may be provided in an SEI message. In some embodiments, the annotation information may be provided in a container file. The independently decodable portion of the first media stream may be, for example, a submesh, a tile, or a subpicture, among other alternatives. The way a content is subdivided into independently decodable portions is specified inside the encoded content. In some embodiments, the annotation information may include an identifier (e.g. an integer identifier) or label (e.g. a string) of one or more annotated regions of the first media stream.

At 406, the independently decodable portion(s) of the media stream is identified based on the annotation information and the second information of the scene description file, and at 408, the independently decodable portion(s) of the first media stream are decoded. The decoded portion(s) of the first media stream may be presented to a user, for example as elements of an extended reality scene.

In some embodiments, the second information includes first coordinates defining a region in the first media stream, the annotation information includes second coordinates of annotated regions that are associated with independently decodable portions of the first media stream, and the independently decodable portion of the first media stream is decoded in response to a determination that the independently decodable portion is associated with annotated regions that match the coordinates in the second information..

In some embodiments, the second information identifies a viewport-based region, and the annotation information includes coordinates of annotated regions that are associated with independently decodable portions of the first media stream. Some such embodiments further include determining a current user viewport. The independently decodable portion of the first media stream is decoded in response to a determination that the independently decodable portion is associated with annotated regions that match the coordinates of the current user viewport..

Some embodiments further include initializing a media access function, MAF. The initializing of the MAF may include providing the second information using an application programming interface, API, of the MAF.

In a scene encoding method according to some embodiments, a scene description file is encoded. The scene description file includes first information that identifies at least a first media stream and second information that identifies least one section of the first media stream. The first media stream includes annotation information, the annotation information associating the identified section with at least one independently decodable portion of the first media stream.

### Example Systems.

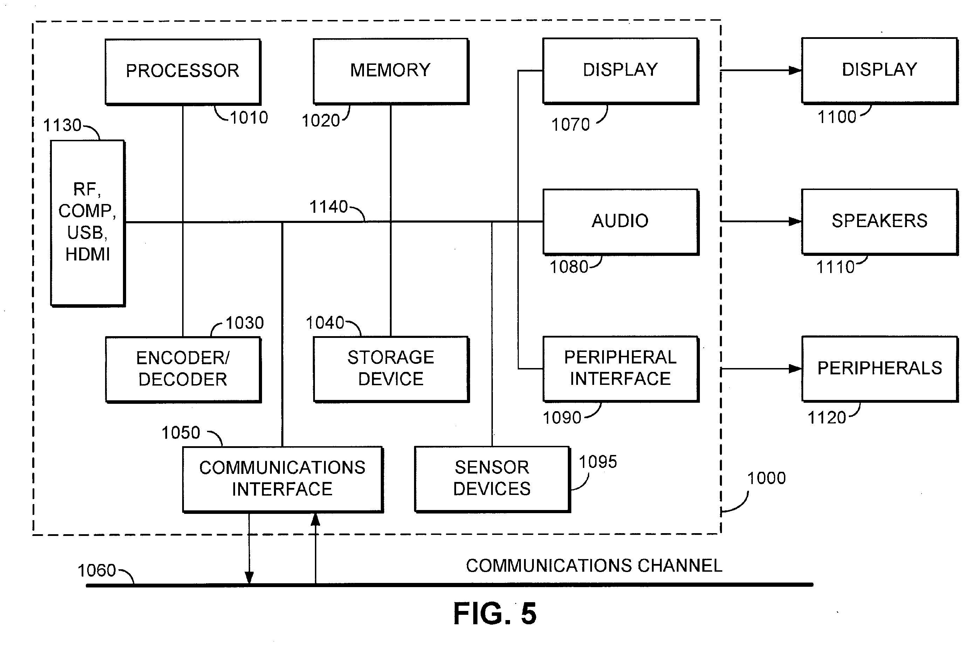

The encoding, decoding, processing, and rendering of scene descriptions as described herein may be implemented using a system such as the system of FIG. 5. FIG. 5 is a block diagram of an example of a system in which various aspects and embodiments are implemented. System 1000 can be embodied as a device including the various components described below and is configured to perform one or more of the aspects described in this document. Examples of such devices, include, but are not limited to, various electronic devices such as personal computers, laptop computers, smartphones, tablet computers, digital multimedia set top boxes, digital television receivers, personal video recording systems, connected home appliances, and servers. Elements of system 1000, singly or in combination, can be embodied in a single integrated circuit (IC), multiple ICs, and/or discrete components. For example, in at least one embodiment, the processing and encoder/decoder elements of system 1000 are distributed across multiple ICs and/or discrete components. In various embodiments, the system 1000 is communicatively coupled to one or more other systems, or other electronic devices, via, for example, a communications bus or through dedicated input and/or output ports. In various embodiments, the system 1000 is configured to implement one or more of the aspects described in this document.

The system 1000 includes at least one processor 1010 configured to execute instructions loaded therein for implementing, for example, the various aspects described in this document. Processor 1010 can include embedded memory, input output interface, and various other circuitries as known in the art. The system 1000 includes at least one memory 1020 (e.g., a volatile memory device, and/or a non-volatile memory device). System 1000 includes a storage device 1040, which can include non-volatile memory and/or volatile memory, including, but not limited to, Electrically Erasable Programmable Read-Only Memory (EEPROM), Read-Only Memory (ROM), Programmable Read-Only Memory (PROM), Random Access Memory (RAM), Dynamic Random Access Memory (DRAM), Static Random Access Memory (SRAM), flash, magnetic disk drive, and/or optical disk drive. The storage device 1040 can include an internal storage device, an attached storage device (including detachable and non-detachable storage devices), and/or a network accessible storage device, as non-limiting examples.

System 1000 includes an encoder/decoder module 1030 configured, for example, to process data to provide an encoded scene or decoded scene, and the encoder/decoder module 1030 can include its own processor and memory. The encoder/decoder module 1030 represents module(s) that can be included in a device to perform the encoding and/or decoding functions. As is known, a device can include one or both of the encoding and decoding modules. Additionally, encoder/decoder module 1030 can be implemented as a separate element of system 1000 or can be incorporated within processor 1010 as a combination of hardware and software as known to those skilled in the art.

Program code to be loaded onto processor 1010 or encoder/decoder 1030 to perform the various aspects described in this document can be stored in storage device 1040 and subsequently loaded onto memory 1020 for execution by processor 1010. In accordance with various embodiments, one or more of processor 1010, memory 1020, storage device 1040, and encoder/decoder module 1030 can store one or more of various items during the performance of the processes described in this document. Such stored items can include, but are not limited to, the input scene, the decoded scene or portions of the decoded scene, the bitstream, matrices, variables, and intermediate or final results from the processing of equations, formulas, operations, and operational logic.

In some embodiments, memory inside of the processor 1010 and/or the encoder/decoder module 1030 is used to store instructions and to provide working memory for processing that is needed during encoding or decoding. In other embodiments, however, a memory external to the processing device (for example, the processing device can be either the processor 1010 or the encoder/decoder module 1030) is used for one or more of these functions. The external memory can be the memory 1020 and/or the storage device 1040, for example, a dynamic volatile memory and/or a non-volatile flash memory. In several embodiments, an external non-volatile flash memory is used to store the operating system of, for example, a television. In at least one embodiment, a fast external dynamic volatile memory such as a RAM is used as working memory for video coding and decoding operations, such as for MPEG-2 (MPEG refers to the Moving Picture Experts Group, MPEG-2 is also referred to as ISO/IEC 13818, and 13818-1 is also known as H.222, and 13818-2 is also known as H.262), HEVC (HEVC refers to High Efficiency Video Coding, also known as H.265 and MPEG-H Part 2), or WC (Versatile Video Coding, a new standard being developed by JVET, the Joint Video Experts Team).

The input to the elements of system 1000 can be provided through various input devices as indicated in block 1130. Such input devices include, but are not limited to, (i) a radio frequency (RF) portion that receives an RF signal transmitted, for example, over the air by a broadcaster, (ii) a Component (COMP) input terminal (or a set of COMP input terminals), (iii) a Universal Serial Bus (USB) input terminal, and/or (iv) a High Definition Multimedia interface (HDMI) input terminal.

In various embodiments, the input devices of block 1130 have associated respective input processing elements as known in the art. For example, the RF portion can be associated with elements suitable for (i) selecting a desired frequency (also referred to as selecting a signal, or band-limiting a signal to a band of frequencies), (ii) downconverting the selected signal, (iii) band-limiting again to a narrower band of frequencies to select (for example) a signal frequency band which can be referred to as a channel in certain embodiments, (iv) demodulating the downconverted and band-limited signal, (v) performing error correction, and (vi) demultiplexing to select the desired stream of data packets. The RF portion of various embodiments includes one or more elements to perform these functions, for example, frequency selectors, signal selectors, band-limiters, channel selectors, filters, downconverters, demodulators, error correctors, and demultiplexers. The RF portion can include a tuner that performs various of these functions, including, for example, downconverting the received signal to a lower frequency (for example, an intermediate frequency or a near-baseband frequency) or to baseband. In one set-top box embodiment, the RF portion and its associated input processing element receives an RF signal transmitted over a wired (for example, cable) medium, and performs frequency selection by filtering, downconverting, and filtering again to a desired frequency band. Various embodiments rearrange the order of the above-described (and other) elements, remove some of these elements, and/or add other elements performing similar or different functions. Adding elements can include inserting elements in between existing elements, such as, for example, inserting amplifiers and an analog-to-digital converter. In various embodiments, the RF portion includes an antenna.

Additionally, the USB and/or HDMI terminals can include respective interface processors for connecting system 1000 to other electronic devices across USB and/or HDMI connections. It is to be understood that various aspects of input processing, for example, Reed-Solomon error correction, can be implemented, for example, within a separate input processing IC or within processor 1010 as necessary. Similarly, aspects of USB or HDMI interface processing can be implemented within separate interface ICs or within processor 1010 as necessary. The demodulated, error corrected, and demultiplexed stream is provided to various processing elements, including, for example, processor 1010, and encoder/decoder 1030 operating in combination with the memory and storage elements to process the datastream as necessary for presentation on an output device.

Various elements of system 1000 can be provided within an integrated housing, Within the integrated housing, the various elements can be interconnected and transmit data therebetween using suitable connection arrangement 1140, for example, an internal bus as known in the art, including the Inter-IC (I2C) bus, wiring, and printed circuit boards.

The system 1000 includes communication interface 1050 that enables communication with other devices via communication channel 1060. The communication interface 1050 can include, but is not limited to, a transceiver configured to transmit and to receive data over communication channel 1060. The communication interface 1050 can include, but is not limited to, a modem or network card and the communication channel 1060 can be implemented, for example, within a wired and/or a wireless medium.

Data is streamed, or otherwise provided, to the system 1000, in various embodiments, using a wireless network such as a Wi-Fi network, for example IEEE 802.11 (IEEE refers to the Institute of Electrical and Electronics Engineers). The Wi-Fi signal of these embodiments is received over the communications channel 1060 and the communications interface 1050 which are adapted for Wi-Fi communications. The communications channel 1060 of these embodiments is typically connected to an access point or router that provides access to external networks including the Internet for allowing streaming applications and other over-the-top communications. Other embodiments provide streamed data to the system 1000 using a set-top box that delivers the data over the HDMI connection of the input block 1130. Still other embodiments provide streamed data to the system 1000 using the RF connection of the input block 1130. As indicated above, various embodiments provide data in a non-streaming manner. Additionally, various embodiments use wireless networks other than Wi-Fi, for example a cellular network or a Bluetooth network.

The system 1000 can provide an output signal to various output devices, including a display 1100, speakers 1110, and other peripheral devices 1120. The display 1100 of various embodiments includes one or more of, for example, a touchscreen display, an organic light-emitting diode (OLED) display, a curved display, and/or a foldable display. The display 1100 can be for a television, a tablet, a laptop, a cell phone (mobile phone), or other device. The display 1100 can also be integrated with other components (for example, as in a smart phone), or separate (for example, an external monitor for a laptop). The other peripheral devices 1120 include, in various examples of embodiments, one or more of a stand-alone digital video disc (or digital versatile disc) (DVR, for both terms), a disk player, a stereo system, and/or a lighting system. Various embodiments use one or more peripheral devices 1120 that provide a function based on the output of the system 1000. For example, a disk player performs the function of playing the output of the system 1000.

In various embodiments, control signals are communicated between the system 1000 and the display 1100, speakers 1110, or other peripheral devices 1120 using signaling such as AV.Link, Consumer Electronics Control (CEC), or other communications protocols that enable device-to-device control with or without user intervention. The output devices can be communicatively coupled to system 1000 via dedicated connections through respective interfaces 1070, 1080, and 1090. Alternatively, the output devices can be connected to system 1000 using the communications channel 1060 via the communications interface 1050. The display 1100 and speakers 1110 can be integrated in a single unit with the other components of system 1000 in an electronic device such as, for example, a television. In various embodiments, the display interface 1070 includes a display driver, such as, for example, a timing controller (T Con) chip.

The display 1100 and speaker 1110 can alternatively be separate from one or more of the other components, for example, if the RF portion of input 1130 is part of a separate set-top box. In various embodiments in which the display 1100 and speakers 1110 are external components, the output signal can be provided via dedicated output connections, including, for example, HDMI ports, USB ports, or COMP outputs.

The system 1000 may include one or more sensor devices 1095. Examples of sensor devices that may be used include one or more GPS sensors, gyroscopic sensors, accelerometers, light sensors, cameras, depth cameras, microphones, and/or magnetometers. Such sensors may be used to determine information such as user's position and orientation. Where the system 1000 is used as the control module for an augmented reality display (such as control modules 124, 1254), the user's position and orientation may be used in determining how to render image data such that the user perceives the correct portion of a virtual object or virtual scene from the correct point of view. In the case of head-mounted display devices, the position and orientation of the device itself may be used to determine the position and orientation of the user for the purpose of rendering virtual content. In the case of other display devices, such as a phone, a tablet, a computer monitor, or a television, other inputs may be used to determine the position and orientation of the user for the purpose of rendering content. For example, a user may select and/or adjust a desired viewpoint and/or viewing direction with the use of a touch screen, keypad or keyboard, trackball, joystick, or other input. Where the display device has sensors such as accelerometers and/or gyroscopes, the viewpoint and orientation used for the purpose of rendering content may be selected and/or adjusted based on motion of the display device.

The embodiments can be carried out by computer software implemented by the processor 1010 or by hardware, or by a combination of hardware and software. As a non-limiting example, the embodiments can be implemented by one or more integrated circuits. The memory 1020 can be of any type appropriate to the technical environment and can be implemented using any appropriate data storage technology, such as optical memory devices, magnetic memory devices, semiconductor-based memory devices, fixed memory, and removable memory, as non-limiting examples. The processor 1010 can be of any type appropriate to the technical environment, and can encompass one or more of microprocessors, general purpose computers, special purpose computers, and processors based on a multi-core architecture, as non-limiting examples.

### Further Embodiments.

A scene decoding method according to some embodiments comprises: obtaining a scene description file, the scene description file including first information identifying at least a first media stream and second information identifying at least one section of the first media stream; obtaining annotation information associated with the first media stream, the annotation information associating the identified section with at least one independently decodable portion of the first media stream; and decoding the independently decodable portion of the first media stream.

A scene decoding apparatus according to some embodiments comprises one or more processors configured to perform at least: obtaining a scene description file, the scene description file including first information identifying at least a first media stream and second information identifying at least one section of the first media stream; obtaining annotation information associated with the first media stream, the annotation information associating the identified section with at least one independently decodable portion of the first media stream; and decoding the independently decodable portion of the first media stream.

A scene encoding method according to some embodiments comprises: encoding a scene description file, the scene description file including first information identifying at least a first media stream and second information identifying at least one section of the first media stream; wherein the first media stream includes annotation information, the annotation information associating the identified section with at least one independently decodable portion of the first media stream.

A scene encoding apparatus according to some embodiments comprises one or more processors configured to perform at least: encoding a scene description file, the scene description file including first information identifying at least a first media stream and second information identifying at least one section of the first media stream; wherein the first media stream includes annotation information, the annotation information associating the identified section with at least one independently decodable portion of the first media stream.

In some embodiments, the first information includes a uniform resource identifier, URI, of the first media stream.

In some embodiments, the annotation information is provided in a supplemental enhancement information, SEI, message.

In some embodiments, the annotation information is provided in a container file.

In some embodiments, the second information includes an identifier or label of the section of the first media stream.

In some embodiments, the second information includes coordinates defining a region in the first media stream.

In some embodiments, the annotation information includes coordinates of the independently decodable portion of the first media stream.

In some embodiments, the independently decodable portion of the first media stream is a submesh, a tile, or a subpicture.

In some embodiments, the second information includes first coordinates defining a region in the first media stream, the annotation information includes second coordinates of the independently decodable portion of the first media stream, and the independently decodable portion of the first media stream is decoded in response to a determination that the independently decodable portion is at least partially contained in the defined region.

In some embodiments, the second information identifies a viewport-based region, and the annotation information includes coordinates of the independently decodable portion of the first media stream, and the method further comprises: determining a current user viewport; wherein the independently decodable portion of the first media stream is decoded in response to a determination that the independently decodable portion is at least partially contained in the current user viewport.

Some embodiments further comprise initializing a media access function, MAF, wherein initializing the MAF comprises providing the second information using an application programming interface, API, of the MAF.

A computer-readable medium according to some embodiments stores instructions for performing any of the methods described herein. In some embodiments, the computer-readable medium is a non-transitory medium.

This disclosure describes a variety of aspects, including tools, features, embodiments, models, approaches, etc. Many of these aspects are described with specificity and, at least to show the individual characteristics, are often described in a manner that may sound limiting. However, this is for purposes of clarity in description, and does not limit the disclosure or scope of those aspects. Indeed, all of the different aspects can be combined and interchanged to provide further aspects. Moreover, the aspects can be combined and interchanged with aspects described in earlier filings as well.

The aspects described and contemplated in this disclosure can be implemented in many different forms. While some embodiments are illustrated specifically, other embodiments are contemplated, and the discussion of particular embodiments does not limit the breadth of the implementations. At least one of the aspects generally relates to encoding and decoding, and at least one other aspect generally relates to transmitting a bitstream generated or encoded. These and other aspects can be implemented as a method, an apparatus, a computer readable storage medium having stored thereon instructions for encoding or decoding scene data according to any of the methods described, and/or a computer readable storage medium having stored thereon a bitstream generated according to any of the methods described.

Various methods are described herein, and each of the methods comprises one or more steps or actions for achieving the described method. Unless a specific order of steps or actions is required for proper operation of the method, the order and/or use of specific steps and/or actions may be modified or combined. Additionally, terms such as "first", "second", etc. may be used in various embodiments to modify an element, component, step, operation, etc., such as, for example, a "first decoding" and a "second decoding". Use of such terms does not imply an ordering to the modified operations unless specifically required. So, in this example, the first decoding need not be performed before the second decoding, and may occur, for example, before, during, or in an overlapping time period with the second decoding.

Various numeric values may be used in the present disclosure, for example. The specific values are for example purposes and the aspects described are not limited to these specific values.

Embodiments described herein may be carried out by computer software implemented by a processor or other hardware, or by a combination of hardware and software. As a non-limiting example, the embodiments can be implemented by one or more integrated circuits. The processor can be of any type appropriate to the technical environment and can encompass one or more of microprocessors, general purpose computers, special purpose computers, and processors based on a multi-core architecture, as non-limiting examples.

When a figure is presented as a flow diagram, it should be understood that it also provides a block diagram of a corresponding apparatus. Similarly, when a figure is presented as a block diagram, it should be understood that it also provides a flow diagram of a corresponding method/process.

The implementations and aspects described herein can be implemented in, for example, a method or a process, an apparatus, a software program, a data stream, or a signal. Even if only discussed in the context of a single form of implementation (for example, discussed only as a method), the implementation of features discussed can also be implemented in other forms (for example, an apparatus or program). An apparatus can be implemented in, for example, appropriate hardware, software, and firmware. The methods can be implemented in, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Reference to "one embodiment" or "an embodiment" or "one implementation" or "an implementation", as well as other variations thereof, means that a particular feature, structure, characteristic, and so forth described in connection with the embodiment is included in at least one embodiment. Thus, the appearances of the phrase "in one embodiment" or "in an embodiment" or "in one implementation" or "in an implementation", as well any other variations, appearing in various places throughout this disclosure are not necessarily all referring to the same embodiment.

Additionally, this disclosure may refer to "determining" various pieces of information. Determining the information can include one or more of, for example, estimating the information, calculating the information, predicting the information, or retrieving the information from memory.

Further, this disclosure may refer to "accessing" various pieces of information. Accessing the information can include one or more of, for example, receiving the information, retrieving the information (for example, from memory), storing the information, moving the information, copying the information, calculating the information, determining the information, predicting the information, or estimating the information.

Additionally, this disclosure may refer to "receiving" various pieces of information. Receiving is, as with "accessing", intended to be a broad term. Receiving the information can include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, predicting the information, or estimating the information.

It is to be appreciated that the use of any of the following "/", "and/or", and "at least one of", for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended for as many items as are listed.

Also, as used herein, the word "signal" refers to, among other things, indicating something to a corresponding decoder. For example, in certain embodiments the encoder signals a particular one of a plurality of parameters for region-based filter parameter selection for de-artifact filtering. In this way, in an embodiment the same parameter is used at both the encoder side and the decoder side. Thus, for example, an encoder can transmit (explicit signaling) a particular parameter to the decoder so that the decoder can use the same particular parameter. Conversely, if the decoder already has the particular parameter as well as others, then signaling can be used without transmitting (implicit signaling) to simply allow the decoder to know and select the particular parameter. By avoiding transmission of any actual functions, a bit savings is realized in various embodiments. It is to be appreciated that signaling can be accomplished in a variety of ways. For example, one or more syntax elements, flags, and so forth are used to signal information to a corresponding decoder in various embodiments. While the preceding relates to the verb form of the word "signal", the word "signal" can also be used herein as a noun.

Implementations can produce a variety of signals formatted to carry information that can be, for example, stored or transmitted. The information can include, for example, instructions for performing a method, or data produced by one of the described implementations. For example, a signal can be formatted to carry the bitstream of a described embodiment. Such a signal can be formatted, for example, as an electromagnetic wave (for example, using a radio frequency portion of spectrum) or as a baseband signal. The formatting can include, for example, encoding a data stream and modulating a carrier with the encoded data stream. The information that the signal carries can be, for example, analog or digital information. The signal can be transmitted over a variety of different wired or wireless links, as is known. The signal can be stored on a processor-readable medium.

We describe a number of embodiments. Features of these embodiments can be provided alone or in any combination, across various claim categories and types. Further, embodiments can include one or more of the following features, devices, or aspects, alone or in any combination, across various claim categories and types:
- A bitstream or signal that includes one or more of the described syntax elements, or variations thereof.
- A bitstream or signal that includes syntax conveying information generated according to any of the embodiments described.
- Creating and/or transmitting and/or receiving and/or decoding a bitstream or signal that includes one or more of the described syntax elements, or variations thereof.
- Creating and/or transmitting and/or receiving and/or decoding according to any of the embodiments described.
- A method, process, apparatus, medium storing instructions, medium storing data, or signal according to any of the embodiments described.

Note that various hardware elements of one or more of the described embodiments may be referred to as "modules" that carry out (i.e., perform, execute, and the like) various functions that are described herein in connection with the respective modules. As used herein, a module includes hardware (e.g., one or more processors, one or more microprocessors, one or more microcontrollers, one or more microchips, one or more application-specific integrated circuits (ASICs), one or more field programmable gate arrays (FPGAs), one or more memory devices) deemed suitable for a given implementation. Each described module may also include instructions executable for carrying out the one or more functions described as being carried out by the respective module, and it is noted that those instructions could take the form of or include hardware (i.e., hardwired) instructions, firmware instructions, software instructions, and/or the like, and may be stored in any suitable non-transitory computer-readable medium or media, such as commonly referred to as RAM, ROM, etc.

Although features and elements are described above in particular combinations, each feature or element can be used alone or in any combination with the other features and elements. In addition, the methods described herein may be implemented in a computer program, software, or firmware incorporated in a computer-readable medium for execution by a computer or processor. Examples of computer-readable storage media include, but are not limited to, a read only memory (ROM), a random access memory (RAM), a register, cache memory, semiconductor memory devices, magnetic media such as internal hard disks and removable disks, magnetooptical media, and optical media such as CD-ROM disks, and digital versatile disks (DVDs). A processor in association with software may be used to implement a radio frequency transceiver for use in a WTRU, UE, terminal, base station, RNC, or any host computer.

## Claims

1. A scene decoding method comprising:
obtaining a scene description file, the scene description file including first information identifying a first media stream and second information identifying at least one parameter for decoding of the first media stream;
obtaining annotation information associated with the first media stream, the annotation information identifying one or more annotated sections of the first media stream and associating each of the annotated sections with at least one respective independently decodable portion of the first media stream;
identifying from among the annotated sections a first annotated section corresponding to the parameter; and
decoding the independently decodable portion of the first media stream associated with the first annotated section.

2. A scene encoding method comprising:
encoding a scene description file, the scene description file including first information identifying a first media stream and second information identifying at least one parameter for decoding of the first media stream;
wherein the first media stream includes annotation information, the annotation information identifying one or more annotated sections of the first media stream and associating each of the annotated sections with at least one respective independently decodable portion of the first media stream.

3. A scene decoding apparatus comprising one or more processors configured to perform at least:
obtaining a scene description file, the scene description file including first information identifying a first media stream and second information identifying at least one parameter for decoding of the first media stream;
obtaining annotation information associated with the first media stream, the annotation information identifying one or more annotated sections of the first media stream and associating each of the annotated sections with at least one respective independently decodable portion of the first media stream;
identifying from among the annotated sections a first annotated section corresponding to the parameter; and
decoding the independently decodable portion of the first media stream associated with the first annotated section.

4. A scene encoding apparatus comprising one or more processors configured to perform at least:
encoding a scene description file, the scene description file including first information identifying a first media stream and second information identifying at least one parameter for decoding of the first media stream;
wherein the first media stream includes annotation information, the annotation information identifying one or more annotated sections of the first media stream and associating each of the annotated sections with at least one respective independently decodable portion of the first media stream.

5. The method of claim 1 or 2, or the apparatus of claim 3 or 4, wherein the first information includes a uniform resource identifier, URI, of the first media stream.

6. The method of claim 1 or 2 or claim 5 as it depends from claim 1 or 2, or the apparatus of claim 3 or 4 or claim 5 as it depends from claim 3 or 4, wherein the annotation information is provided in a supplemental enhancement information, SEI, message.

7. The method of claim 1 or 2 or claims 5-6 as they depend from claim 1 or 2, or the apparatus of claim 3 or 4 or claims 5-6 as they depend from claim 3 or 4, wherein the annotation information is provided in a container file.

8. The method of claim 1 or 2 or claims 5-7 as they depend from claim 1 or 2, or the apparatus of claim 3 or 4 or claims 5-7 as they depend from claim 3 or 4, wherein the second information includes an identifier or label, and wherein the annotation information associates the identifier or label with the independently decodable portion of the first media stream.

9. The method of claim 1 or 2 or claims 5-8 as they depend from claim 1 or 2, or the apparatus of claim 3 or 4 or claims 5-8 as they depend from claim 3 or 4, wherein the second information includes coordinates.

10. The method of claim 1 or 2 or claims 5-9 as they depend from claim 1 or 2, or the apparatus of claim 3 or 4 or claims 5-9 as they depend from claim 3 or 4, wherein the annotation information includes coordinates of at least one of the annotated sections of the first media stream.

11. The method of claim 1 or 2 or claims 5-10 as they depend from claim 1 or 2, or the apparatus of claim 3 or 4 or claims 5-10 as they depend from claim 3 or 4, wherein the independently I decodable portion of the first media stream is a submesh, a tile, or a subpicture.

12. The method of claim 1 or claims 5-10 as they depend from claim 1, or the apparatus of claim 3 or claims 5-10 as they depend from claim 3, wherein the second information includes first coordinates defining a region in the first media stream, the annotation information includes second coordinates of annotated regions that are associated with respective independently decodable portions of the first media stream, and the independently decodable portion of the first media stream is decoded in response to a determination that the independently decodable portion is associated with annotated regions corresponding to the coordinates in the second information.

13. The method of claim 1 or claims 5-12 as they depend from claim 1, or the apparatus of claim 3 or claims 5-12 as they depend from claim 3, wherein the second information identifies a viewport-based region, and the annotation information includes coordinates of annotated regions that are associated with independently decodable portions of the first media stream, further comprising:
determining a current user viewport;
wherein the independently decodable portion of the first media stream is decoded in response to a determination that the independently decodable portion is associated with annotated regions corresponding to the coordinates of the current user viewport.

14. The method of claim 1 or claims 5-13 as they depend from claim 1, or the apparatus of claim 3 or claims 5-13 as they depend from claim 3, further comprising initializing a media access function, MAF, wherein initializing the MAF comprises providing the second information using an application programming interface, API, of the MAF.

15. A computer-readable medium storing instructions for performing the method of claim 1 or 2 or any of claims 5-14 as they depend from claim 1 or 2.
